# EUROPÄISCHE PATENTSCHRIFT

(11) **EP 3 740 419 B1**
(45) Veröffentlichungstag und Bekanntmachung des Hinweises auf die Patenterteilung: **04.03.2026**
(21) Anmeldenummer: 19702027.4
(22) Anmeldetag: 18.01.2019
(51) Int. Cl.: B62D 53/08, B62D 53/12

(54) **KOPPLUNGSKOMPONENTE, SYSTEM ZUM KOPPELN UND VERFAHREN ZUR MONTAGE EINER KOPPLUNGSKOMPONENTE**
COUPLING COMPONENT, SYSTEM FOR COUPLING AND METHOD FOR MOUNTING SUCH A COUPLING COMPONENT
COMPOSANT DE COUPLAGE, SYSTÈME DE COUPLAGE ET PROCÉDÉ DE MONTAGE D'UN COMPOSANT DE COUPLAGE

(30) Priorität: 19.01.2018 DE 102018101169
(43) Veröffentlichungstag der Anmeldung: 25.11.2020
(73) Patentinhaber: SAF-HOLLAND GmbH, 63856 Bessenbach (DE)
(72) Erfinder: HARTMANN, Mark, 63869 Heigenbrücken (DE); KÖSTER, Mario Sebastian, 78351 Bodman-Ludwigshafen (DE); WALLMEIER, Stefan, 63773 Goldbach (DE)
(74) Vertreter: Müller Schupfner & Partner Patent- und Rechtsanwaltspartnerschaft mbB (Muc)
(86) Internationale Anmeldenummer: PCT/EP2019/051208
(87) Internationale Veröffentlichungsnummer: WO 2019/141797

(56) Entgegenhaltungen:
- EP-B1- 2 112 008
- DE-U- 1 934 459
- US-A- 2 850 292
- US-A- 4 556 232
- US-A- 4 949 987
- US-A- 5 558 351
- US-A1- 2004 021 291
- US-A1- 2011 037 241
- US-B2- 8 840 128

## Beschreibung

Die vorliegende Erfindung betrifft eine Kopplungskomponente, ein System zum Koppeln zwischen einer Sattelzugmaschine und einem Sattelauflieger und ein Verfahren zum Anschließen einer Kopplungskomponente an einen Sattelauflieger.

Das Anbinden eines Sattelaufliegers an eine Sattelzugsmaschine ist aus dem Stand der Technik hinlänglich bekannt. Hierzu verfügt der Sattelauflieger typischerweise über ein Zapfenelement, insbesondere einen Königszapfen, der in einem gekoppelten Zustand in eine entsprechende Sattelkupplung, oder auch Kupplungsplatte mit Kupplungshaken, an der Sattelzugmaschine eingreift. Neben dem mechanischen Anbinden des Sattelaufliegers an der Sattelzugmaschine gehört zum erfolgreichen Ankoppeln des Sattelaufliegers an die Sattelzugsmaschine auch das Verbinden von sattelzugmaschinenseitigen und aufliegerseitigen Leitungen, wie z. B. Luftdruckleitungen und elektrische Leitungen, die zur Versorgung der Lichtanlage oder anderer Elektronik erforderlich sind. Zur Führung der Leitungen ist vorzugsweise eine Kopplungskomponente vorgesehen, in oder an der die Leitungen in einen für die gewünschte Verbindung vorgesehenen Schnittstellebereich geführt werden. Diese Kopplungskomponente ist vorzugsweise schwenkbar gelagert, um die Leitungen für die Kopplung einfach ausrichten zu können, wenn die Sattelzugmaschine und der Sattelauflieger beim Koppeln schräg, d. h. nicht fluchtend, zueinander ausgerichtet sind. Aus dem Stand der Technik, wie z. B. aus der DE 10 2006 033 899 A1, ist es bekannt, diese Kopplungskomponente in einem einzelnen Punkt schwenkbar, beispielsweise über einen Drehteller oder Drehkranz, anzulenken. Allerdings ist es bei einem solchen Ansatz erforderlich, die Leitungen aufwendig durch den Drehteller bzw. Drehkranz zu führen, wodurch eine Struktur oberhalb des Königszapfens angepasst werden muss. Alternativ kennt der Stand der Technik auch das Anbinden der Kopplungskomponente über eine Manschette, die den Königzapfen umgreift. Es hat sich aber herausgestellt, dass eine solche Anbindung hinsichtlich ihrer Belastbarkeit eingeschränkt ist, insbesondere bei einer zunehmenden Belastung durch ein erhöhtes Biegemoment, das wiederum mit zunehmender Länge der Kopplungskomponente zwangsläufig entsteht.

US 2011/037241 A1 beschreibt ein automatisches Kupplungssystem für pneumatische und elektrische Verbindungen.

Ferner ist aus der US 2 850 292 A eine Anbindung einer Zugmaschine an einen Sattelauflieger bekannt, wobei eine Kopplungsplatte vorgesehen ist. Ferner schlägt diese Anmeldung vor, dass eine anhängerseitige Schiene an entsprechenden Rollen der Kopplungsplatte anliegt und dadurch um einen Königzapfen schwenkbar ist.

Aus der EP 2 112 008 A1 ist eine Steckerkonsole bekannt, die in einem Schnittstellenbereich zwischen einer Zugmaschine und einem Sattelanhänger angeordnet ist. Die Steckerkonosle ist schwenkbar um ein Zapfenelement und translatorisch an einer Kulissenführung gelagert.

Ausgehend von diesem Hintergrund macht es sich die vorliegende Erfindung zur Aufgabe, eine verbesserte Kopplungskomponente bereitzustellen, die auch erhöhten Belastungen standhält und möglichst drehtellerfrei an den Sattelauflieger angebunden werden kann.

Diese Aufgabe wird gelöst durch ein System gemäß Anspruch 1 und ein Verfahren gemäß Anspruch 13. Weitere Vorteile und Merkmale der Erfindung ergeben sich aus den Unteransprüchen sowie der Beschreibung und den beigefügten Figuren.

Erfindungsgemäß ist eine Kopplungskomponente, insbesondere ein Ausleger, für einen Schnittstellenbereich zwischen einem Sattelauflieger und einer Sattelzugmaschine vorgesehen, die in einem Schnittstellenbereich über ein Zapfenelement lösbar miteinander verbindbar sind, umfassend ein zapfenseitigen Anschlussbereich zur schwenkbaren Lagerung der Kopplungskomponente am Zapfenelement und ein schienenseitigen Anschlussbereich für eine einer Translationsrichtung folgenden schiebbaren Lagerung der Kopplungskomponente an einer Schiene des Sattelaufliegers. Im Gegensatz zum Stand der Technik ist die erfindungsgemäße Kopplungskomponente über zwei verschiedene Anschlussbereiche - einmal verschwenkbar und einmal verschiebbar - an den Sattelauflieger. angebunden, wodurch sich mit Vorteil die von außen auf die Kopplungskomponente wirkenden Kräfte besser verteilen, insbesondere im Vergleich zu einer Anlenkung über einen einzelnen Punkt bzw. Anlenkungspunkt. Vorzugsweise ist die Kopplungskomponente dabei drehtellerfrei an den Sattelauflieger angebunden. Insbesondere ist es vorgesehen, dass der zapfenseitige Anschlussbereich und der schienenseitige Anschlussbereich einander gegenüberliegen, vorzugsweise an aneinander gegenüberliegenden Enden der Kopplungskomponente angeordnet sind. Grundsätzlich ist als Kopplungskomponente ein Bauteil zu verstehen, das Bestandteil eines Mechanismus zum Ankoppeln des Sattelaufliegers an der Sattelzugmaschine ist. Als Ausleger dient die Kopplungskomponente insbesondere zur Führung bzw. als Träger von aufliegerseitigen Leitungen, die im Schnittstellenbereich mit entsprechenden sattelzugmaschinenseitigen Leitungen verbunden werden. Beispielsweise handelt es sich bei den Leitungen um Gasdruck bzw. Luftdruckleitungen oder elektrische Leitungen, die für die Versorgung der Lichtanlage oder andere Elektronik vorgesehen sind. Die Leitungen können hierbei beispielsweise einzeln oder als Bündel an der Kopplungskomponente festgelegt sein. Dabei ist die Kopplungskomponente bzw. der Ausleger gegenüber dem Zapfenelement schwenkbar zu lagern. Das Zapfenelement ist vorzugsweise der Königszapfen, der ausgelegt ist, im gekoppelten Zustand in eine komplementäre Sattelkupplung an der Sattelzugmaschine einzugreifen. Weiterhin ist es vorzugsweise vorgesehen, dass die Kopplungskomponente einen Grundkörper, insbesondere einen gabelförmigen Grundköper, mit Seitenarmen aufweist. Dabei ist die Form des Grundkörpers im Wesentlichen an einen Eingangsbereich bzw. eine maulartige Eingangsöffnung der Sattelkupplung bzw. Kupplungsplatte angepasst, und der Eingangsbereich ist auf der im montierten Zustand dem Sattelauflieger zugewandten Seite an der Sattelkupplung angeordnet. Insbesondere ist der Grundkörper derart ausgestaltet, dass er vom Eingangsbereich bzw. der Eingangsöffnung der Sattelkopplung beim Ankoppeln geführt bzw. ausgerichtet wird. Erfindungsgemäß ist es vorgesehen, dass die Schiene und die Kopplungskomponente an einer Unterseite des Sattelaufliegers montiert sind. Im montierten Zustand ist die Kopplungskomponente schwenkbar am Zapfenelement angelenkt und verschiebbar, insbesondere translatorisch, an der Schiene des Sattelaufliegers gelagert. Die Translationsrichtung folgt dabei einem bogenförmigen Verlauf, der konzentrisch zum Zapfenelement ausgerichtet ist.

Zweckmäßig verläuft die Schiene zumindest teilweise geradlinig und/oder teilkreisförmig. Vorzugsweise erstreckt sich die teilkreisförmige Schiene konzentrisch zum Zapfenelement. Beispielweise erstreckt sich die Schiene dabei über einen Winkelbereich, der größer ist als 45°, bevorzugt größer als 135° und besonders bevorzugt größer als 180°. Die teilkreisförmige Schiene bzw. die Bereiche der teilkreisförmigen Schiene verlaufen insbesondere parallel zur Translationsrichtung. Weiterhin ist es vorgesehen, dass die gradlinigen Schienenbereiche parallel zu den Kanten einer Grundplatte bzw. des Fahrzeugrahmens des Sattelaufliegers verlaufen und insbesondere zumindest größtenteils nicht der Translationsrichtung folgen. Es ist auch vorstellbar, dass sich geradlinige und teilkreisförmige Bereiche abwechseln. Besonders bevorzugt ist es vorgesehen, dass der teilkreisförmige Bereich der Schiene in Fahrtrichtung gesehen hinter dem Zapfenelement angeordnet ist. Insbesondere ist die Schiene symmetrisch, insbesondere spiegelsymmetrisch zu einer gedachten längs durch den Auflieger mittig laufenden Mittelachse ausgestaltet. Sofern mehrere teilkreisförmige Bereiche vorgesehen sind, lässt sich diesen teilkreisförmigen Bereichen vorzugsweise der gleiche Krümmungsradius zuordnen.

Erfindungsgemäß ist die Schiene als Steg und/oder Nut ausgestaltet. Dabei steht erfindungsgemäß der Steg von einer Unterseite des Sattelaufliegers ab. Beispielsweise ist der Steg über einen oder mehrere Flansche an der Unterseite montiert, insbesondere angeschweißt oder angeschraubt. An einen solchen Steg lässt sich der schienenseitige Anschlussbereich vergleichsweise einfach montieren. Vorzugsweise ist der schienenseitige Anschlussbereich im montierten Zustand in den Steg eingehangen. Weiterhin ist es vorgesehen, dass der Steg in einer senkrecht zur Translationsrichtung erstreckenden Ebene einen profilierten Querschnitt aufweist. Ein solcher Querschnitt lässt sich mit Vorteil zur Führung eines komplementär ausgestalteten Profils am schienenseitigen Anschlussbereich der Kopplungskomponente nutzen. Denkbar ist auch, dass der Steg eine Hinterschneidung, einen gestuften Verlauf und/oder eine Nut aufweist. Vorzugsweise ist die Profilierung auf der der Unterseite des Sattelaufliegers zugewandten Seite des Stegs angeordnet. So ist das Profil der Fahrbahn abgewandt und entsprechend geschützt. Erfindungsgemäß ist es vorgesehen, dass die Schiene als in die Unterseite des Sattelaufliegers eingelassene Nut ausgestaltet ist. Als solche Nut ist die Schiene in der Unterseite des Sattelaufliegers versenkt und kann bei einem Verschwenken des Sattelaufliegers keinen Schaden verursachen. Um einen bestehenden Auflieger mit einer solchen Nut auszustatten, ist eine an der Unterseite des Sattelaufliegers montierbare Platte vorstellbar, in die wiederum eine Nut eingelassen ist.

Vorzugsweise nimmt ein Verhältnis zwischen einem geradlinig verlaufenden Anteil der Schiene zu einem teilkreisförmig verlaufenden Anteil einen Wert zwischen 0,1 und 0,6, bevorzugt zwischen 0,2 und 0,5 und besonders bevorzugt zwischen 0,35 und 0,48 an. Mit zunehmenden geradlinigem verlaufenden Anteil werden Zusatzmaßnahmen erforderlich, um die Schwenkbewegung der Kopplungskomponente sicherzustellen, während eine vollständig teilkreisförmige Schiene, insbesondere eine halbkreisförmige Schiene, bauraumfüllend ist. Es hat sich herausgestellt, dass für ein Verhältnis zwischen 0,35 und 0,48 ein vergleichsweise kompaktes System aus Kopplungskomponente und Schiene bereitgestellt werden kann, dessen Zusatzmaßnahmen zudem stabil und zuverlässig ein Verschwenken über den geradlinigen Anteil der Schiene erlaubt.

Zweckmäßig ist die Kopplungskomponente im montierten Zustand mindestens um einen Verschwenkwinkel von 145°, bevorzugt von 160° und besonders bevorzugt von 180° um das Zapfenelement verschwenkbar. Dadurch lässt sich die Kopplungskomponente beidseitige vergleichsweise weit auslenken. Eine solche weite Auslenkung erleichtert die Ankopplung auch für Ausrichtungen von Sattelauflieger und Sattelzugmaschine, bei denen die Mittelachsen von Sattelauflieger und Sattelzugmaschine einen Winkel umschließen, der größer ist als 90°.

Vorzugsweise ist im schienenseitigen Anschlussbereich eine Kupplungsstruktur und/oder ein Schlittenelement zur Anbindung an die Schiene angeordnet. Vorzugsweise ist die Kupplungsstruktur komplementär zum Querschnittprofil der Schiene ausgestaltet. Dadurch lässt sich der schienenseitige Anschlussbereich über die Schiene führen. Weiterhin ist es bevorzugt vorgesehen, dass als Bindeglied zwischen der Schiene und dem schienenseitigen Anschlussbereich ein Schlittenelement vorgesehen ist. Beispielsweise greift ein solches Schlittenelement in eine entsprechende Nut ein und lässt sich in dieser Nut beim Verschwenken führen. Weiterhin ist es vorstellbar, dass die Schiene einen Schmiermittelkanal umfasst, um die Kontaktstellen zwischen der Schiene und dem Schlittenelement bzw. der Kopplungsstruktur mit Schmiermittel zu versorgen.

Weiterhin ist es bevorzugt vorgesehen, wenn die Schiene und/oder das Schlittenelement beschichtet sind, vorzugsweise mit einer gummiartigen Beschichtung versehen ist. Dabei ist es bevorzugt vorgesehen, dass die Beschichtung an der Kontaktstelle zwischen Schiene und Schlittenelement angeordnet ist. Dadurch ist es nicht nur möglich, dass die Abnutzung von Schiene und Schlittenelement reduziert wird, sondern zusätzlich auch eine Entdröhnung bzw. Schallbildung bei der Relativbewegung von Schiene und Schlittenelement zueinander gemindert wird. Beispielsweise ist es vorstellbar, dass das Schlittenelement Rollen aufweist, die zumindest teilweise, bevorzugt vollständig, mit der Beschichtung ummantelt sind. Vorzugsweise sind die Seitenarme der Kopplungskomponente, insbesondere an ihrer Außenseite, zusätzlich mit einer dämpfenden Beschichtung versehen, um beim Ankoppeln ein andernfalls beim Anschlagen der Seitenarme an der Sattelkupplung erzeugtes Geräusch zu dämpfen. Zudem wird die Belastung für die Seitenarme reduziert.

Weiterhin kann es zweckmäßig sein, am Ende der Schiene Anschlagselemente aufzuweisen, die insbesondere dazu ausgelegt sind, das Anschlagen des Kopplungselements zu dämpfen. Beispielsweise lässt sich ein solcher Anschlag als Gummielement oder Pfropfen an den Enden der Schiene realisieren.

Gemäß einer weiteren Ausführungsform der vorliegenden Erfindung ist es vorgesehen, dass die Schiene Sensorelemente aufweist, wobei die Sensorelemente konfiguriert sind, die aktuelle Position der Kopplungskomponente an der Schiene zu ermitteln. Beispielsweise handelt es sich dabei um einen oder mehrere Drucksensoren, oder eine Kamera. Das Erfassen der aktuellen Ausrichtung kann Informationen über die Relativstellung zwischen Sattelzug und Sattelauflieger enthalten, die beispielsweise für einen automatischen Kopplungsvorgang genutzt werden können.

Weiterhin ist es bevorzugt vorgesehen, dass die Kopplungskomponente, insbesondere deren Kopplungsstruktur, derart formschlüssig mit der Schiene zusammenwirkt, dass der Formschluss im Wesentlichen eine Relativbewegung entlang einer vertikalen Richtung verhindert. Insbesondere sind die Kopplungskomponente und die Schiene derart ausgelegt, dass der Formschluss verhindert, dass sich die Kopplungskomponente durch eine vertikale Bewegung von der Schiene lösen kann. Dadurch wird in vorteilhafter Weise verhindert, dass sich in Folge von betriebsbedingten Erschütterungen die Kopplungskomponente versehentlich von der Schiene lösen kann.

Weiterhin ist es vorstellbar, dass die Kopplungskomponente an mehreren Kontaktstellen an die Schiene angebunden ist, wobei die Kontaktstellen voneinander entlang der Schiene beabstandet sind. Dadurch lässt sich die Stabilität der Kopplungskomponente gegenüber einer Verdrehung bzw. Torsion aus der horizontalen Ebene erhöhen.

Zweckmäßig ist die Kopplungskomponente, das Schlittenelement und/oder die Schiene zur Vergrößerung des potentiellen Verschwenkwinkels dimensionsveränderlich, insbesondere ausfahrbar. Durch diese Dimensionsänderungen ist es mit Vorteil möglich, auch über den teilkreisförmigen Abschnitt hinaus eine Schwenkbewegung für die Kupplungsstruktur sicherzustellen. Folge ist, dass der schienenseitige Anschlussbereich der Translationsrichtung weiter folgen kann, wenn die Schiene nicht mehr parallel zur Translationsrichtung verläuft. Dabei ist es vorstellbar, dass die Dimensionsänderung als Längenänderung realisierbar ist. Vorzugsweise sind das Schlittenelement und die Schiene in einer der Translationsrichtung folgenden Richtung verlängerbar. Dadurch lässt sich der potentiell in Translationsrichtung zur Verfügung stehende Weg erweitern. Bei der Kopplungskomponente erfolgt die Längenänderung vom Zapfenelement aus gesehen radial nach außen. Dadurch kann der größer werdende Abstand zwischen einer gradlinigen Schiene und der Kopplungskomponente beim Verschwenken überbrückt werden und so die Bewegungsfreiheit der Kopplungskomponente bei deren Verschwenken sichergestellt werden. Es ist dabei auch vorstellbar, dass die Kopplungskomponente elastische verformbar ist und dabei die Verlängerung in radialer Richtung zumindest unterstützt.

Vorzugsweise nimmt ein Verhältnis einer ersten Seitenlänge, die die Kopplungskomponente, das Schlittenelement oder die Schiene in einem eingefahrenen Zustand aufweist, zu einer zweiten Seitenlänge, die die Kopplungskomponente, das Schlittenelement oder die Schiene in einem ausgefahrenen Zustand aufweist, einen Wert zwischen 0,1 und 0,6, bevorzugt zwischen 0,2 und 0,55 und besonders bevorzugt zwischen 0,41 und 0,49 an. Dabei bemessen sich die erste Seitenlänge und die zweite Seitenlänge
- für den Schlitten und die Schiene in einer der Translationsrichtung folgenden Richtung und
- für die Kopplungskomponente in eine vom Zapfenelement aus gesehen radial verlaufenden Richtung.

Als erste bzw. zweite Seitenlänge wird dabei insbesondere eine entsprechende Gesamterstreckung des jeweiligen Bauteils verstanden. Vorzugsweise sind die Kopplungskomponente, das Schlittenelement oder die Schiene zu beiden Seiten hin ausfahrbar. Für das Verhältnis zwischen 0,41 und 0,49 hat es sich mit Vorteil herausgestellt, dass sich ein besonders stabiles und kompaktes System aus Schiene und Kopplungskomponente bereitgestellt werden kann, das bei großen Auslenkungen zuverlässig funktioniert.

Vorteilhaft ist die Kopplungskomponente für ein automatisches Koppeln der Sattelzugmaschine und des Sattelaufliegers ausgelegt. D. h. die Kopplungskomponente lässt sich aktiv oder passiv während eines automatisierten Ankoppeln des Sattelaufliegers an die Sattelzugmaschine ausrichten.

Zweckmäßig ist die Schiene, die Kopplungskomponente und/oder das Schlittenelement mehrteilig ausgestaltet ist. Dadurch lässt sich auf einfache Weise ein Teleskopmechanismus realisieren, der die gewünschte Dimensionsänderung, vorzugsweise Längenänderung gestattet. In der Kopplungskomponente ist vorzugsweise ein Teleskopmechanismus in einen sich vom Zapfenelement aus gesehen radial nach außen erstreckenden Teil integriert, beispielsweise in die Seitenarme des Grundkörpers, in einen ersten Längsträger und/oder in einen zweiten Längsträger. Weiterhin ist es vorgesehen, dass das mehrteilige Bauteil, d. h. die Kopplungskomponente, das Schlittenelement und/oder die Schiene, einen Rückstellmechanismus aufweist, der das Bauteil, beispielsweise nach einer Schwenkbewegung, wieder zurück in seinen Ruhezustand überführt.

Vorzugsweise weist der zapfenseitige Anschlussbereich eine Manschette zum Anbinden an das Zapfenelement auf. Mit der Manschette lässt sich eine möglichst einfache schwenkbare Anbindung an das Zapfenelement realisieren. Unter Anbinden bzw. einer Anbindung ist vorzugsweise eine Verbindung zu verstehen, die zum Separieren des angebundenen Bauteils eine Maßnahme zum gegenseitigen Lösen bzw. Trennen erfordert. Beispielsweise umschließt die Manschette das Zapfenelement vollständig. Es ist aber auch vorstellbar, dass die Manschette auf ihrer dem schienenseitigen Anschlussbereich zugewandten oder abgewandten Seite eine Öffnung, beispielsweise in Form eines Schlitzes, aufweist.

Zweckmäßig nimmt ein Verhältnis zwischen einer Manschettenbreite der Manschette im zapfenseitigen Anschlussbereich und einer Zapfenlänge einen Wert zwischen 0,1 und 0,5, bevorzugt zwischen 0,25 und 0,48 und besonders bevorzugt zwischen 0,35 und 0,45 an. Es hat sich für das Verhältnis zwischen 0,35 und 0,45 herausgestellt, dass sich durch die dadurch veranlasste flächige Anlage die Belastungen möglichst gleichmäßig auf den Königszapfen verteilen lassen. Gleichzeitig ist ein freiliegender Bereich am Zapfenelement ausreichend groß, um ungestört die Ankupplung an die Sattelkupplung an der Sattelzugmaschine zu realisieren.

Vorzugsweise sind im montierten Zustand innerhalb und/oder außerhalb der Kopplungskomponente Leitungen angeordnet oder anordenbar. Dadurch lassen sich die Leitungen kontrolliert und gezielt mittels der Kopplungskomponente führen. Insbesondere lässt sich mit der Kopplungskomponente auch sicherstellen, dass sich keine herabhängenden Leitungen während des Ankoppelprozesses mit der Sattelzug verfangen. Vorzugsweise werden die Leitungen so an der Kopplungskomponente angebracht, dass sie im montierten Zustand auf Höhe der Seitenarme verlaufen. Von Vorteil ist es, wenn die Leitungen innerhalb der Kopplungskomponente verlaufen. Dadurch werden die Leitungen in vorteilhafter Weise durch die Kopplungskomponente geschützt. Vorzugsweise werden einzelne Leitungen und/oder Leitungsbündel an der Kopplungskomponente montiert.

Zweckmäßig ist es vorgesehen, dass die Kopplungskomponente eine Vorrichtung zur Verlängerung einer Leitung umfasst. Dadurch kann die entsprechende Leitung bei der Schwenkbewegung eine erforderliche Längenänderung gewährleisten, so dass die Schwenkbewegung der Kopplungskomponente nicht durch die Länge der Leitung begrenzt wird bzw. es wird die Wahrscheinlichkeit für eine Schädigung reduziert. Beispielsweise handelt es sich bei der Vorrichtung zur Verlängerung einer Leitung um eine Kabeltrommel, in der die Leitung mit einer Torsionsfeder vorgespannt ist. Es ist aber auch vorstellbar, dass die Vorrichtung zum Verlängern der Leitung einen Teleskopmechanismus nutzt. Beispielsweise sind hierbei ein erster Leitungsabschnitt und ein zweiter Leitungsabschnitt über ein Mantelelement verbunden, wobei das Mantelelement schiebbar in einer Halteeinrichtung gelagert ist. Das Mantelelement ist vorzugsweise über ein Federelement gegen die Halteeinrichtung vorgespannt, wenn die Kopplungskomponente verschwenkt wird.

Ein weiterer Gegenstand der vorliegenden Erfindung ist ein System zum Koppeln, insbesondere automatischen Koppeln, zwischen einer Sattelzugmaschine und einem Sattelauflieger, umfassend eine Schiene und eine Kopplungskomponente, die über einen zapfenseitigen Anschlussbereich schwenkbar an einem Zapfenelement des Sattelaufliegers und mit einem schienenseitigen Anschlussbereich entlang einer Translationsrichtung verschiebbar an der Schiene lagerbar ist. Vorzugsweise umfasst das System neben der Schiene und der Kopplungskomponente ein Zapfenelement. Alle für die erfindungsgemäße Kopplungskomponente und deren bevorzugter Ausführungsformen beschriebenen Merkmale und deren Vorteile lassen sich sinngemäß ebenfalls auf das erfindungsgemäße System übertragen und andersherum.

Ein weiterer Gegenstand der vorliegenden Erfindung ist ein Verfahren zur Montage einer Kopplungskomponente, insbesondere zum Aufrüsten eines Sattelaufliegers, wobei die Kopplungskomponente einen zapfenseitigen Anschlussbereich zur schwenkbaren Lagerung der Kopplungskomponente am Zapfenelement und einen schienenseitigen Anschlussbereich zur schiebbaren Lagerung der Kopplungskomponente an einer Schiene aufweist, wobei die Kopplungskomponente an das Zapfenelement und die Schiene angebunden wird. Alle für die erfindungsgemäße Kopplungskomponente und deren bevorzugter Ausführungsformen beschriebenen Merkmale und deren Vorteile lassen sich sinngemäß ebenfalls auf das erfindungsgemäße Verfahren übertragen und andersherum.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden. Es zeigen
- Fig.1:: eine Kopplungskomponente gemäß einer ersten beispielhaften Ausführungsform
- Fig.2:: eine Kopplungskomponente gemäß einer zweiten beispielhaften Ausführungsform der vorliegenden Erfindung
- Fig.3:: eine Kopplungskomponente gemäß einer dritten beispielhaften Ausführungsform der vorliegenden Erfindung
- Fig.4:: eine Kopplungskomponente gemäß einer vierten beispielhaften Ausführungsform der vorliegenden Erfindung

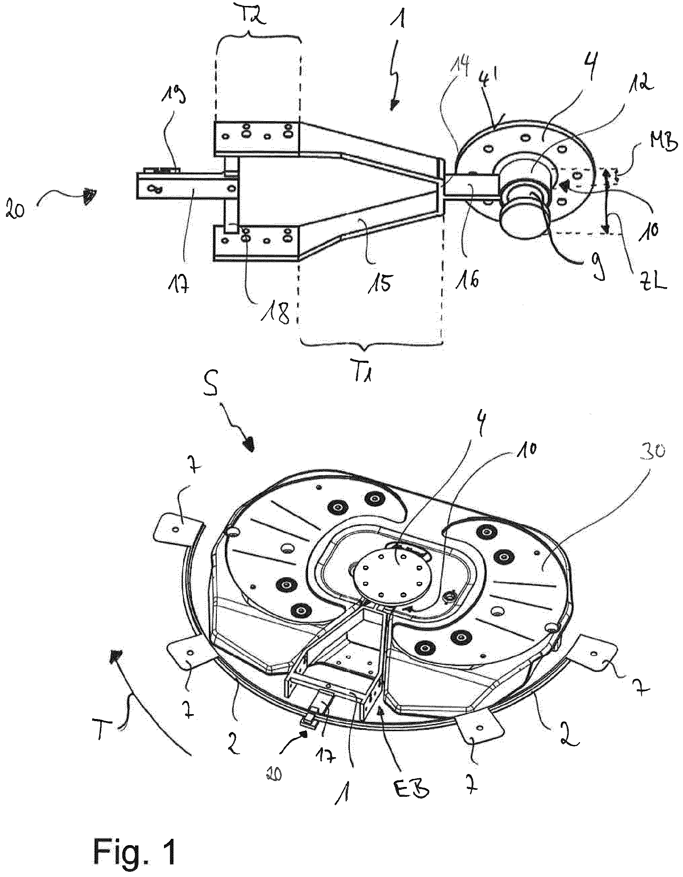

In **Fig. 1** ist eine Kopplungskomponente 1 gemäß einer ersten beispielhaften Ausführungsform der vorliegenden Erfindung dargestellt. Ein solche Kopplungskomponente 1 dient als Stützkonstruktion bzw. Gehäuse für Leitungen, die beim Ankuppeln eines Sattelaufliegers an eine Sattelzugmaschine aufliegerseitig an einen entsprechenden sattelzugmaschinenseitigen Anschlussbereich herangeführt und an diesen angebunden werden sollen. Insbesondere soll dabei das Ausrichten, Heranführen und das Anbinden automatisch erfolgen, d. h. beim Ankuppeln des Sattelaufliegers an die Sattelzugmaschine, wird ohne zusätzlichen manuellen Arbeitsschritt die Verbindung der Leitung vorgenommen. Bei den Leitungen handelt es sich beispielsweise um elektrische Leitungen und/oder Luftdruckleitungen. Das Verbinden des Sattelaufliegers und der Sattelzugmaschine erfolgt dabei über ein Zapfenelement 9, insbesondere einen Königszapfen, der mit einem Befestigungsteller 4 drehfest an einer Unterseite des Sattelaufliegers angebunden ist. Im angekoppelten Zustand greift das Zapfenelement 9 in eine entsprechende Sattelkupplung 30 der Sattelzugmaschine unter Ausbildung eines Schnittstellenbereich S (siehe untere Abbildung in Figur 1) ein.

Um die auf die Kopplungskomponente 1 wirkenden Belastungen zu reduzieren, ist es vorgesehen, dass die Kopplungskomponente 1 (siehe oberer Abbildung in Figur 1) einen zapfenseitigen Anschlussbereich 10 und einen schienenseitigen Anschlussbereich 20 aufweist. Dadurch wird mit Vorteil eine schwenkbare Anlenkung der Kopplungskomponente 1 über zwei Punkte realisiert, wodurch sich wiederum eine verbesserte Verteilung der Belastungen einstellt. Dabei ist es vorgesehen, dass die Kopplungskomponente 1 mit dem zapfenseitigen Anschlussbereich 10 schwenkbar an dem Zapfenelement 9 angelenkt ist und mit dem schienenseitigen Anschlussbereich 20 entlang einer Translationsrichtung T verschiebbar an einer Schiene 2 gelagert ist. Dabei ist die Schiene 2 Teil des Sattelaufliegers bzw. mit dem Sattelauflieger starr verbunden. Vorzugsweise erstreckt sich die Schiene 2 über mindestens 180°, insbesondere konzentrisch zum Zapfenelement 9, d. h. halbkreisförmig. In dem in Figur 1 dargestellten Beispiel ist die Schiene 2 über mehrere Flansche 7 an die Unterseite des Aufliegers anbindbar und steht nach dem Anbinden vom Sattelauflieger nach unten ab.

Die Kopplungskomponente 1 umfasst vorzugsweise einen Grundköper, insbesondere einen gabelförmigen Grundkörper, mit Seitenarmen 15, die in Längsrichtung der Kopplungskomponente 1 gesehen an der im montierten Zustand dem Zapfenelement 9 zugwandten Seite mit einem ersten Querträger 14 und auf der im montierten Zustand der Schiene 2 zugwandten Seite über einen zweiten Querträger 18 miteinander verbunden sind. Der erste Querträger 14 und der zweite Querträger 18 sind dabei im Wesentlichen parallel zueinander ausgerichtet. Weiterhin sind die Seitenarme 15 derart ausgestaltet, dass sich in einem ersten Teilbereich T1 der Abstand zwischen den Seitenarmen 15 in Richtung des schienenseitigen Anschlussbereichs 20 vergrößert und in einem zweiten Teilbereich T2 der Abstand zwischen den Seitenwänden 15 im Wesentlichen konstant ist. Weiterhin ist es vorgesehen, dass auf der dem Zapfenelement 9 zugwandten Seite ein erster Längssteg 16 vom ersten Querträger 14 absteht. Der erste Längssteg 16 verbindet vorzugsweise den Grundköper mit einer Manschette 12, in der das Zapfenelement 9 gelagert ist. Vorzugsweise ist eine Länge des ersten Längsstegs 16 größer als ein Radius des Befestigungstellers 4, an dem das Zapfenelement 9 drehfest montiert ist bzw. der erste Längssteg 14 ist derart dimensioniert, dass er vom Zapfenelement 9 aus gesehen radial gegenüber dem äußersten Rand 4' des Befestigungsteller 4 übersteht.

Von dem zweiten Querträger 18 steht in Richtung der Schiene 2 ein zweiter Längssteg 17, insbesondere vom Zapfenelement 9 gesehen radial, ab, wobei der Längssteg 17 an seinem einen Ende eine Kupplungsstruktur 19 umfasst. Vorzugsweise ist der zweite Längssteg 17 derart ausgerichtet, dass seine großflächigste Seite im montierten Zustand der Schiene 2 zugewandt ist. Weiterhin ist der zweite Querträger 18 im montierten Zustand an einem oberen Randbereich der Seitenarme 15 angeordnet, der der Unterseite des Sattelaufliegers zugewandt ist. Die Kupplungsstruktur 19 ist komplementär zur Kontur der Schiene 2 ausgeformt und stellt so die gleitende Bewegung des zweiten Längsstegs 17 auf der Schiene 2 entlang der Translationsrichtung T sicher. Insbesondere ist die Kopplungsstruktur 19 im montierten Zustand in die Schiene 2 eingehangen. Beispielsweise handelt es sich bei der Kupplungsstruktur 19 um eine Nut, einen gestuften Verlauf und/oder eine Hinterschneidung.

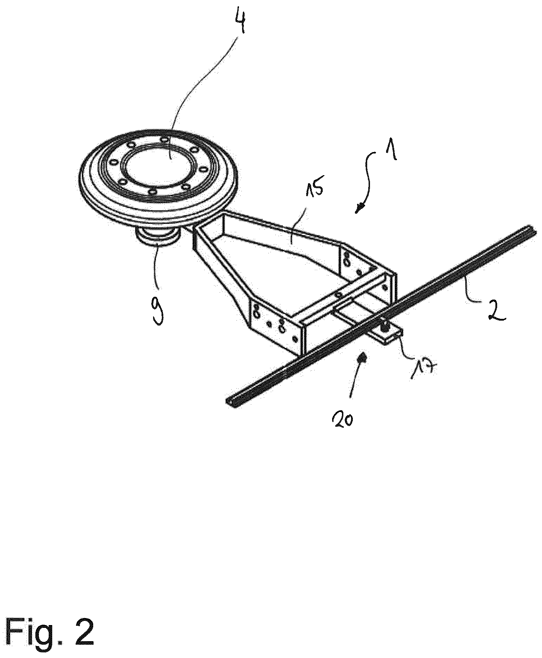

In der **Fig. 2** ist eine zweite beispielhafte Ausführungsform der vorliegenden Erfindung dargestellt. Dabei unterscheidet sich die hier dargestellte Ausführungsform von der aus der Figur 1 dahingehend, dass die Schiene 2 nicht gebogen bzw. teilkreisförmig ist, sondern geradlinig verläuft. Um die Bewegungsfreiheit des zweiten Längsstegs 17 entlang der Schiene 2 im Betrieb sicherzustellen, ist es vorzugsweise vorgesehen, dass der zweite Längssteg 17 längenveränderlich ist. Vorzugsweise ist der zweite Längssteg 17 hierzu mehrteilig und teleskopartig ausgestaltet.

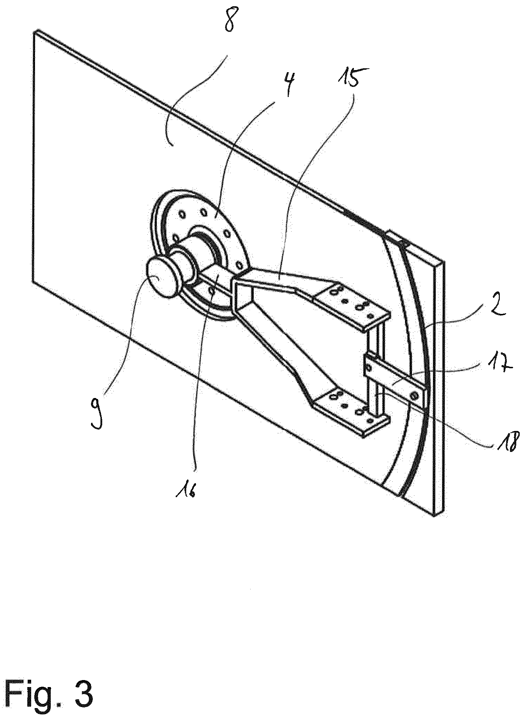

In der in **Fig. 3** dargestellten Ausführungsform ist die Schiene 2 aufliegerseitig als Nut ausgestaltet, die insbesondere in eine Grundplatte 8 an der Unterseite des Sattelaufliegers eingelassen ist. Dadurch steht die Schiene 2 nicht nach unten vom Sattelauflieger ab und kann in dieser Form beim Schwenken des Sattelaufliegers keine Schäden veranlassen.

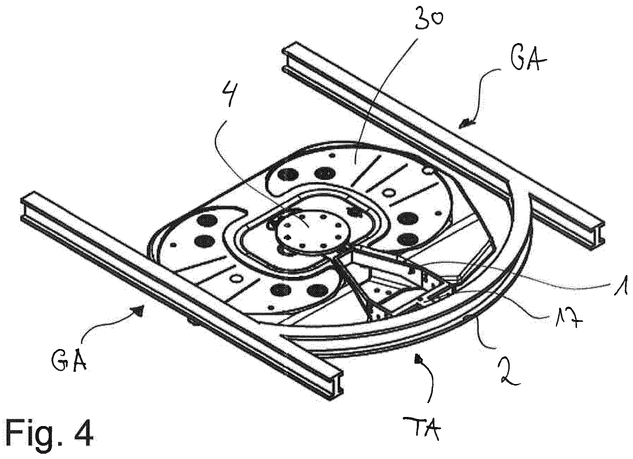

In der in **Fig. 4** dargestellten Ausführungsform ist die Schiene als Doppel T - Träger ausgestaltet, und die Kuppelstruktur 9 greift in eine an der Seite des Doppel - T- Trägers ausgebildeten Führungsnut ein. Dabei ist es ferner vorgesehen, dass die als Doppel - T - Träger ausgeformte Schiene 2 sowohl einen teilkreisförmigen Anteil TA und einen gradlinig verlaufenden Anteil GA aufweist. Vorzugsweise nimmt ein Verhältnis zwischen einem geradlinig verlaufenen Anteil GA der Schiene 2 zu einem teilkreisförmig verlaufenden Anteil TA einen Wert zwischen 0,1 und 0,6, bevorzugt zwischen 0,2 und 0,5 und besonders bevorzugt zwischen 0,35 und 0,48 an.

### Bezugszeichenliste

- 1: Kopplungskomponente
- 2: Schiene
- 4: Befestigungsteller
- 4': äußerster Rand
- 7: Flasche
- 8: Grundplatte
- 9: Zapfenelement
- 10: zapfenseitiger Anschlussbereich
- 14: erster Querträger
- 15: Seitenarm
- 16: erster Längsträger
- 17: zweiter Längsträger
- 18: zweiter Querträger
- 19: Kupplungsstruktur
- 20: schienenseitiger Anschlussbereich
- ZL: Zapfenlänge
- MB: Manschettenbreite
- TA: teilkreisförmig verlaufender Abschnitt
- GA: geradlinig verlaufender Abschnitt
- T1: erster Teilbereich
- T2: zweiter Teilbereich

## Patentansprüche

1. System zum Koppeln, insbesondere automatischen Koppeln, zwischen einer Sattelzugmaschine und einem Sattelauflieger, umfassend
- eine Schiene (2) und
- eine Kopplungskomponente (1), die über einen zapfenseitigen Anschlussbereich (10) schwenkbar an einem Zapfenelement (9) des Sattelaufliegers und
mit einem schienenseitigen Anschlussbereich (20) entlang einer Translationsrichtung (T) verschiebbar an der Schiene (9) lagerbar ist,
wobei die Kopplungskomponente über die Anschlussbereiche an den Sattelanhänger angebunden ist,
wobei die Schiene (2) und die Kopplungskomponente (1) an einer Unterseite des Sattelaufliegers montiert sind, **dadurch gekennzeichnet, dass**
die Schiene (2) als Steg, der von einer Unterseite des Sattelaufliegers absteht und/oder als Nut, die in der Unterseite des Sattelaufliegers eingelassen ist, ausgestaltet ist.

2. System zum Koppeln gemäß Anspruch 1, wobei die Schiene (2) zumindest teilweise geradlinig und/oder teilkreisförmig verläuft.

3. System zum Koppeln gemäß Anspruch 2, wobei ein Verhältnis zwischen einem geradlinig verlaufenden Anteil (GA) der Schiene (2) zu einem teilkreisförmig verlaufenden Anteil (TA) einen Wert zwischen 0,1 und 0,6, bevorzugt zwischen 0,2 und 0,5 und besonders bevorzugt zwischen 0,35 und 0,48 annimmt.

4. System zum Koppeln gemäß einem der vorhergehenden Ansprüche, wobei die Kopplungskomponente (1) im montierten Zustand mindestens um einen Verschwenkwinkel von 145° um das Zapfenelement (9) verschwenkbar ist.

5. System zum Koppeln gemäß einem der vorhergehenden Ansprüche, wobei im schienenseitigen Anschlussbereich (20) eine Kupplungsstruktur (19) und/oder ein Schlittenelement zur Anbindung an die Schiene (2) angeordnet ist.

6. System zum Koppeln gemäß einem der vorhergehenden Ansprüche, wobei ein Verhältnis einer ersten Seitenlänge, die die Kopplungskomponente (1), das Schlittenelement oder die Schiene (2) in einem eingefahrenen Zustand aufweist, zu einer zweiten Seitenlänge, die die Kopplungskomponente (1), das Schlittenelement oder die Schiene (2) in einem ausgefahrenen Zustand aufweist, einen Wert zwischen 0,1 und 0,6, bevorzugt zwischen 0,2 und 0,55 und besonders bevorzugt zwischen 0,41 und 0,49 einnimmt.

7. System zum Koppeln gemäß einem der vorhergehenden Ansprüche, wobei die Kopplungskomponente (1) für ein automatisches Koppeln der Sattelzugmaschine und des Sattelaufliegers ausgelegt ist.

8. System zum Koppeln gemäß Anspruch 5, 6 oder 7,
wobei die Kopplungskomponente (1), das Schlittenelement und/oder die Schiene (2) zur Vergrößerung des potentiellen Verschwenkwinkels dimensionsveränderlich, insbesondere ausfahrbar, sind.

9. System zum Koppeln gemäß einem der vorhergehenden Ansprüche, wobei die Schiene (2), die Kopplungskomponente (1) und/oder das Schlittenelement mehrteilig ausgestaltet ist.

10. System zum Koppeln gemäß einem der vorhergehenden Ansprüche, wobei der zapfenseitige Anschlussbereich (10) eine Manschette (2) zum Anbinden an das Zapfenelement (9) aufweist.

11. System zum Koppeln gemäß einem der vorhergehenden Ansprüche, wobei ein Verhältnis zwischen einer Manschettenbreite (MB) der Manschette (12) im zapfenseitigen Anschlussbereich (10) und einer Zapfenlänge (9) einen Wert zwischen 0,1 und 0,5, bevorzugt zwischen 0,25 und 0,48 und besonders bevorzugt zwischen 0,35 und 0,45 annimmt.

12. System zum Koppeln gemäß einem der vorhergehenden Ansprüche, weiterhin aufweisend eine Vorrichtung zur Verlängerung einer Leitung.

13. Verfahren zur Montage einer Kopplungskomponente (1), insbesondere zum Aufrüsten eines Sattelaufliegers, wobei die Kopplungskomponente (1) über zwei verschiedene Anschlussbereich an den Sattelanhänger angebunden ist, wobei die Kopplungskomponente (1) einen zapfenseitigen Anschlussbereich (10) zur schwenkbaren Lagerung der Kopplungskomponente (1) am Zapfenelement (9) und einen schienenseitigen Anschlussbereich (20) für eine einer Translationsrichtung folgenden schiebbaren Lagerung der Kopplungskomponente (1) an einer Schiene (2) aufweist, wobei die Schiene (2) und die Kopplungskomponente (1) an einer Unterseite des Sattelaufliegers montiert sind, wobei die Kopplungskomponente (1) an das Zapfenelement (9) und die Schiene (2) angebunden wird, **dadurch gekennzeichnet, dass** die Schiene (2) als Steg, der von einer Unterseite des Sattelaufliegers absteht, und/oder als Nut, die in der Unterseite des Sattelaufliegers eingelassen ist, ausgestaltet ist..

## Claims

1. Coupling system, in particular automatic coupling, between a semi-trailer tractor and a semi-trailer, comprising
- a rail (2) and
- a coupling component (1) which is pivotably mounted on a pin element (9) of the semi-trailer via a pin-side connection area (10) and
can be mounted on the rail (9) so that it can be displaced along a translational direction (T) via a rail-side connection area (20),
wherein the coupling component is connected to the semi-trailer via the connection areas,
wherein the rail (2) and the coupling component (1) are mounted on an underside of the semi-trailer, **characterized in that**
the rail (2) is designed as a web projecting from an underside of the semi-trailer and/or as a groove recessed into the underside of the semi-trailer.

2. Coupling system according to claim 1, wherein the rail (2) runs at least partially in a straight line and/or in a partial circle.

3. Coupling system according to claim 2, wherein the ratio between a straight portion (GA) of the rail (2) and a partially circular portion (TA) has a value between 0.1 and 0.6, preferably between 0.2 and 0.5, and particularly preferably between 0.35 and 0.48.

4. Coupling system according to anyone of the preceding claims, wherein the coupling component (1) can be pivoted around the pin element (9) by at least a pivot angle of 145° when assembled.

5. Coupling system according to any one of the preceding claims, wherein a coupling structure (19) and/or a slide element for connection to the rail (2) is arranged in the rail-side connection area (20).

6. Coupling system according to any one of the preceding claims, wherein a ratio of a first side length, which the coupling component (1), the slide element or the rail (2) has in a retracted state, to a second side length, which the coupling component (1), the slide element or the rail (2) has in an extended state, has a value between 0.1 and 0.6, preferably between 0.2 and 0.55, and particularly preferably between 0.41 and 0.49.

7. Coupling system according to anyone of the preceding claims, wherein the coupling component (1) is designed for automatic coupling of the semi-trailer tractor and the semi-trailer.

8. Coupling system according to claim 5, 6, or 7,
wherein the coupling component (1), the slide element and/or the rail (2) are dimensionally variable, in particular extendable, in order to increase the potential swivel angle.

9. Coupling system according to any one of the preceding claims, wherein the rail (2), the coupling component (1) and/or the slide element are designed to be multi-part.

10. Coupling system according to any one of the preceding claims, wherein the pin-side connection area (10) has a sleeve (2) for connecting to the pin element (9).

11. Coupling system according to any one of the preceding claims, wherein a ratio between a sleeve width (MB) of the sleeve (12) in the pin-side connection area (10) and a pin length (9) has a value between 0.1 and 0.5, preferably between 0.25 and 0.48, and particularly preferably between 0.35 and 0.45.

12. Coupling system according to any one of the preceding claims, further comprising a device for extending a line.

13. Method for mounting a coupling component (1), in particular for equipping a semi-trailer, wherein the coupling component (1) is connected to the semi-trailer via two different connection areas, wherein the coupling component (1) has a pin-side connection area (10) for pivotably mounting the coupling component (1) on the pin element (9) and a rail-side connection area (20) for slidable mounting of the coupling component (1) on a rail (2) in a translational direction, wherein the rail (2) and the coupling component (1) are mounted on an underside of the semi-trailer, wherein the coupling component (1) is connected to the pin element (9) and the rail (2), **characterized in that** the rail (2) is designed as a web projecting from an underside of the semi-trailer and/or as a groove recessed into the underside of the semi-trailer.

## Revendications

1. Système de couplage, en particulier de couplage automatique, entre un tracteur routier et une semi-remorque, comprenant
- un rail (2) et
- un composant de couplage (1) qui peut être monté de manière pivotante sur un élément de pivot (9) de la semi-remorque via une zone de raccordement (10) côté pivot et qui peut être monté de manière coulissante sur le rail (9) le long d'une direction de translation (T) via une zone de raccordement (20) côté rail,
le composant de couplage étant relié à la semi-remorque via les zones de raccordement,
le rail (2) et le composant de couplage (1) étant agencés sur une face inférieure de la semi-remorque,
**caractérisé en ce que** le rail (2) est conçu comme une barrette qui dépasse d'une face inférieure de la semi-remorque et/ou comme une rainure qui est noyée dans la face inférieure de la semi-remorque.

2. Système de couplage selon la revendication 1,
dans lequel le rail (2) s'étend au moins en partie de manière rectiligne et/ou en forme de cercle partiel.

3. Système de couplage selon la revendication 2,
dans lequel le rapport entre une partie s'étendant de manière rectiligne (GA) du rail (2) et une partie s'étendant en forme de cercle partiel (TA) prend une valeur comprise entre 0,1 et 0,6, de préférence entre 0,2 et 0,5 et de manière particulièrement préférée entre 0,35 et 0,48.

4. Système de couplage selon l'une des revendications précédentes,
dans lequel le composant de couplage (1), à l'état monté, peut pivoter d'au moins un angle de pivotement de 145° autour de l'élément de pivot (9).

5. Système de couplage selon l'une des revendications précédentes,
dans lequel une structure d'accouplement (19) et/ou un élément coulissant pour la liaison avec le rail (2) est disposé(e) dans la zone de raccordement (20) côté rail.

6. Système de couplage selon l'une des revendications précédentes,
dans lequel le rapport entre une première longueur de côté que présente le composant de couplage (1), l'élément coulissant ou le rail (2) à l'état rétracté et une deuxième longueur de côté que présente le composant de couplage (1), l'élément coulissant ou le rail (2) à l'état déployé, prend une valeur comprise entre 0,1 et 0,6, de préférence entre 0,2 et 0,55 et de manière particulièrement préférée entre 0,41 et 0,49.

7. Système de couplage selon l'une des revendications précédentes,
dans lequel le composant de couplage (1) est conçu pour un couplage automatique du tracteur routier et de la semi-remorque.

8. Système de couplage selon la revendication 5, 6 ou 7,
dans lequel le composant de couplage (1), l'élément coulissant et/ou le rail (2) sont de dimensions variables, en particulier extensibles, afin d'augmenter l'angle de pivotement potentiel.

9. Système de couplage selon l'une des revendications précédentes,
dans lequel le rail (2), le composant de couplage (1) et/ou l'élément coulissant est conçu en plusieurs parties.

10. Système de couplage selon l'une des revendications précédentes,
dans lequel la zone de raccordement (10) côté pivot comporte un manchon (2) pour la liaison avec l'élément de pivot (9).

11. Système de couplage selon l'une des revendications précédentes,
dans lequel le rapport entre la largeur (MB) du manchon (12) dans la zone de raccordement (10) côté pivot et la longueur (9) du pivot prend une valeur comprise entre 0,1 et 0,5, de préférence entre 0,25 et 0,48 et de manière particulièrement préférée entre 0,35 et 0,45.

12. Système de couplage selon l'une des revendications précédentes, comprenant en outre un dispositif de rallongement d'une conduite/ligne.

13. Procédé de montage d'un composant de couplage (1), en particulier pour équiper une semi-remorque, le composant de couplage (1) étant relié à la semi-remorque par deux zones de raccordement différentes, le composant de couplage (1) comportant une zone de raccordement (10) côté pivot pour le montage pivotant du composant de couplage (1) sur l'élément de pivot (9) et une zone de raccordement (20) côté rail pour le montage coulissant du composant de couplage (1) sur un rail (2) suivant une direction de translation, le rail (2) et le composant de couplage (1) étant agencés sur une face inférieure de la semi-remorque, le composant de couplage (1) étant relié à l'élément de pivot (9) et au rail (2),
**caractérisé en ce que** le rail (2) est conçu comme une barrette qui dépasse d'une face inférieure de la semi-remorque et/ou comme une rainure qui est noyée dans la face inférieure de la semi-remorque.
